# EUROPÄISCHE PATENTSCHRIFT

(11) **EP 1 073 689 B1**
(45) Veröffentlichungstag und Bekanntmachung des Hinweises auf die Patenterteilung: **26.03.2003**
(21) Anmeldenummer: 99920615.4
(22) Anmeldetag: 08.04.1999
(51) Int. Cl.: C08G 65/26, C08G 65/10

(54) **VERFAHREN ZUR HERSTELLUNG LANGKETTIGER POLYETHERPOLYOLE**
METHOD FOR PRODUCING LONG-CHAIN POLYETHERPOLYOLS
PROCEDE POUR LA PRODUCTION DE POLYOLS DE POLYETHER A CHAINE LONGUE

(30) Priorität: 21.04.1998 DE 19817676
(43) Veröffentlichungstag der Anmeldung: 07.02.2001
(73) Patentinhaber: Bayer Aktiengesellschaft, 51368 Leverkusen (DE)
(72) Erfinder: HOFMANN, Jörg, D-47829 Krefeld (DE); GUPTA, Pramod, D-50181 Bedburg (DE)
(86) Internationale Anmeldenummer: EP9902397
(87) Internationale Veröffentlichungsnummer: WO99054383

(56) Entgegenhaltungen:
- EP-A- 0 700 949
- EP-A- 0 855 417
- WO-A-95/02625
- WO-A-96/13540

## Beschreibung

Die Erfindung betrifft ein Verfahren zur Herstellung von langkettigen Polyetherpolyolen

Polyetherpolyole sind erhältlich durch Polyaddition von Alkylenoxiden, wie z.B. Ethylenoxid, Propylenoxid, Butylenoxid, an aktive Wasserstoffatome aufweisende Verbindungen, wie Alkohole, Amine, Säureamide, Phenole, und werden unter anderem zur Herstellung von Polyurethankunststoffen, Tensiden und Schmierstoffen verwendet. Die Polyaddition von Epoxiden an Startverbindungen erfolgt technisch üblicherweise durch Alkalikatalyse. Die überwiegend angewandten Alkali-Katalysatoren sind Alkalihydroxide. Nachteilig bei der durch Alkalihydroxide katalysierten Polyetherpolyol-Herstellung sind vor allem die aufwendige Produktaufarbeitung bedingt durch Neutralisation des alkalischen Polymerisates (siehe z.B. US 3 715 402, US 4 430 490, US 4 507 475 und US 4 137 398) und die als Nebenreaktion ablaufende basenkatalysierte Umlagerung von Epoxiden, beispielsweise Propylenoxid, zu Allyl- bzw. Propenylalkoholen, die zu monofunktionellen Polyethern mit endständiger Doppelbindung, sogenannten Monoolen, führt.

Eine bekannte Methode zur Reduzierung des Monool-Gehalts in den Polyetherpolyolen ist der Einsatz von Doppelmetallcyanid(DMC)-Komplexverbindungen als Katalysatoren für die Polyaddition von Epoxiden an Startverbindungen (siehe beispielsweise US 3 404 109, US 3 829 505, US 3 941 849 und US 5 158 922). Die so erhaltenen Polyetherpolyole können zu hochwertigen Polyurethanen (z.B. Elastomere, Schäume, Beschichtungen) verarbeitet werden.

Aus EP 700 949, EP 761 708, WO 97/40086 sowie DE-A 197 45 120.9, 197 57 574.9 und 198 10 269.0 sind verbesserte DMC-Katalysatoren bekannt, die den Anteil an monofunktionellen Polyethem mit endständigen Doppelbindungen bei der Polyetherpolyol-Herstellung weiter zu reduzieren vermögen. Die verbesserten DMC-Katalysatoren besitzen außerordentlich hohe Aktivität und ermöglichen die Herstellung von Polyetherpolyolen bei so geringen Katalysatoreinsätzen (25 ppm oder weniger), daß eine Abtrennung des Katalysators aus dem Polyol nicht mehr erforderlich ist (siehe z.B. Seite 5, Zeilen 24-29 in EP 700 949).

Nachteilig beim Einsatz von DMC-Katalysatoren für die Polyetherpolyol-Herstellung ist, daß diese Katalysatoren normalerweise eine Induktionsperiode benötigen. Im Gegensatz zu Alkali-Katalysatoren starten DMC-Katalysatoren die Epoxid-Polymerisation nicht unmittelbar nach Zugabe von Epoxid und Startverbindung zum Katalysator. Der DMC-Katalysator muß zunächst durch eine geringe Menge an Epoxid aktiviert werden. Typischerweise treten Induktionsperioden von einigen Minuten bis zu mehreren Stunden auf.

Ein weiterer Nachteil ist, daß konventionelle, niedermolekulare Startverbindungen für die alkalikatalysierte Polyetherpolyol-Synthese, wie z.B. Propylenglykol, Glycerin oder Trimethylolpropan, mit DMC-Katalysatoren nicht alkoxyliert werden können. DMC-Katalysatoren erfordern deshalb den Einsatz von oligomeren, alkoxylierten Startverbindungen (z.B. einem propoxylierten Propylenglykol oder Glycerin) mit Molekulargewichten größer als 200 g/mol die zuvor aus den oben genannten niedermolekularen Startern durch z.B. konventionelle Alkalikatalyse (z.B. KOH-Katalyse) und anschließende aufwendige Aufarbeitung durch Neutralisation, Filtration und Entwässerung erhalten wurden. Problematisch ist, daß auch sehr geringe Restmengen an Alkalikatalysator in der alkoxylierten Startverbindung den DMC-Katalysator desaktivieren können, so daß häufig noch ein zusätzlicher, zeitaufwendiger Aufarbeitungsschritt (z.B. Behandlung mit Ionenaustauscher oder Adsorbens) für die vollständige Abtrennung des Alkalikatalysators aus der alkoxylierten Startverbindung erforderlich ist.

Aufgabe der vorliegenden Erfindung ist es daher, ein Verfahren zur aufarbeitungsfreien Herstellung langkettiger Polyetherpolyole zur Verfügung zu stellen, bei dem zunächst aus der niedermolekularen Startverbindung (z.B. Propylenglykol oder Trimethylolpropan) durch eine alternative Katalyse zur konventionellen Alkalikatalyse oligomere, alkoxylierte Startverbindungen erhalten werden, die anschließend direkt, d.h. ohne Katalysatorabtrennung mittels DMC-Katalysatoren bei sehr geringen Katalysatoreinsätzen (30 ppm oder weniger) zu langkettigen Polyetherpolyolen weiterverlängert werden können.

In der deutschen Patentanmeldung Nr. 197 02 787.3 wird ein Verfahren zur Herstellung von Polyetherpolyolen durch Katalyse mit Perfluoralkylsulfonsäuresalzen (Perfluoralkylsulfonaten) der Metalle der Gruppe III A des Periodensystems der Elemente (entsprechend der IUPAC-Konvention von 1970) beschrieben.

Überraschend wurde nun gefunden, daß oligomere, alkoxylierte Startverbindungen mit Molekulargewichten zwischen 200 und 1000 g/mol, die durch die in der obengenannten deutschen Patentanmeldung beschriebenen Metallperfluoralkylsulfonat-Katalysatoren aus konventionellen, niedermolekularen Startern, wie z.B. Propylenglykol oder Trimethylolpropan, durch Umsetzung mit Alkylenoxiden bei Reaktionstemperaturen von 80 bis 200°C und Katalysatorkonzentrationen von 5 bis 200 ppm, bezogen auf die Menge der herzustellenden oligomeren, alkoxylierten Startverbindung, erhalten wurden, direkt, d.h. ohne Katalysatorabtrennung, mittels DMC-Katalysatoren bei sehr geringen Katalysatoreinsätzen (30 ppm oder weniger) durch Reaktion mit Alkylenoxiden zu höhermolekularen, langkettigen Polyetherpolyolen umgesetzt werden können.

Zugleich wurde gefunden, daß beim Einsatz der durch Katälyse mit den Metallperfluoralkylsulfonaten erhaltenen alkoxylierten Startverbindungen die Induktionsund Alkoxylierungszeiten bei der DMC-Katalyse deutlich verkürzt sind, im Vergleich zur Verwendung entsprechender oligomerer Startverbindungen, die durch Alkali-Katalyse und konventionelle Aufarbeitung hergestellt wurden.

Eine Reduktion der Induktions- und Alkoxylierungszeiten führt durch Verkürzung der Cyclenzeiten der Polyetherpolyol-Herstellung zu einer verbesserten Wirtschaftlichkeit des Prozesses.

Gegenstand der vorliegenden Erfindung ist daher ein Verfahren zur Herstellung von langkettigen Polyetherpolyolen, bei dem zunächst durch Katalyse mit Perfluoralkylsulfonaten der Metalle der Gruppe III A des Periodensystems der Elemente (entsprechend der IUPAC-Konvention von 1970) aus niedermolekularen Startern durch Umsetzung mit Alkylenoxiden bei Reaktionstemperaturen von 80 bis 200°C und Katalysatorkonzentrationen von 5 bis 200 ppm oligomere, alkoxylierte Startverbindungen mit Molekulargewichten von 200 bis 1000 g/mol erhalten werden, die anschließend ohne Katalysatorabtrennung mittels hochaktiver DMC-Katalysatoren bei einer Katalysatorkonzentration von 30 ppm oder weniger, bezogen auf die Menge des herzustellenden Polyetherpolyols, durch Reaktion mit Alkylenoxiden zu höhermolekularen, langkettigen Polyetherpolyolen umgesetzt werden.

Als Katalysatoren für die Herstellung der oligomeren, alkoxylierten Startverbindungen werden erfindungsgemäß Perfluoralkylsulfonate der Metalle der Gruppe III A des Periodensystems der Elemente (entsprechend der IUPAC-Konvention von 1970) eingesetzt. Das beinhaltet die Metalle Scandium, Yttrium und die Seltenen Erdmetalle Lanthan, Cer, Praseodym, Neodym, Promethium, Samarium, Europium, Gadolinium, Terbium, Dysprosium, Holmium, Erbium, Thulium, Ytterbium und Lutetium. Als weiteres Metall kann "Mischmetall" (auch "Didymium" genannt), eine Mischung von aus Erz gewonnen Seltenen Erdmetallen, eingesetzt werden.

Unter Perfluoralkylsulfonaten versteht man die Metallsalze von Perfluoralkylsulfonsäuren, in denen das Metall mindestens an eine Perfluoralkylsulfonatgruppe gebunden ist. Daneben können auch andere geeignete Anionen vorhanden sein. Bevorzugt sind die Metallsalze der Trifluormethansulfonsäure, die als Trifluormethansulfonate oder Triflate bezeichnet werden. Bevorzugt eingesetzt werden: Scandium-, Yttrium-, Lanthan-, Cer-, Praseodym-, Neodym-, Samarium-, Europium-, Gadolinium-, Terbium-, Dysprosium-, Holmium-, Erbium-, Thulium-, Ytterbium- und Luthetiumtriflat.

Die Perfluoralkylsulfonate können einzeln oder im Gemisch eingesetzt werden.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Besonders bevorzugt wird Propylenoxid eingesetzt.

Als niedermolekulare Starter werden Verbindungen mit Molekulargewichten von 18 bis 400 g/mol und 1 bis 8 Hydroxylgruppen verwendet. Beispielhaft seien genannt: Ethylenglykol, Diethylenglykol, Triethylenglykol, 1,2-Propylenglykol, Dipropylenglykol, 1,4-Butandiol, Hexamethylenglykol, Bisphenol A, Trimethylolpropan, Glycerin, Pentaerythrit, Sorbit, Rohrzucker, abgebaute Stärke und Wasser. Die niedermolekularen Starter können einzeln oder im Gemisch eingesetzt werden.

Die durch die Metallperfluoralkylsulfonate katalysierte Polyaddition erfolgt im Temperaturbereich von 80 bis 200°C, bevorzugt im Bereich von 90 bis 180°C, besonders bevorzugt von 100 bis 160°C, bei Gesamtdrücken von 0,001 bis 20 bar. Der Prozeß kann in Substanz oder in einem inerten organischen Lösungsmittel, wie z.B. Toluol, Xylol oder THF durchgeführt werden. Die Menge an Lösungsmittel beträgt üblicherweise 10 bis 30 Gew.-%. Bevorzugt wird die Reaktion in Substanz durchgeführt.

Die Katalysatorkonzentration liegt im Bereich von 5 bis 200 ppm, bevorzugt von 5 bis 100 ppm, besonders bevorzugt von 10 bis 50 ppm, jeweils bezogen auf die Menge der herzustellenden oligomeren, alkoxylierten Startverbindung.

Die Reaktionszeiten für die Polyaddition liegen im Bereich von wenigen Minuten bis zu mehreren Tagen.

Die Molekulargewichte der durch die Metallperfluoralkylsulfonate hergestellten oligomeren, alkoxylierten Startverbindungen liegen im Bereich zwischen 200 und 1000 g/mol, bevorzugt im Bereich zwischen 200 und 800 g/mol.

Der Polyadditionsprozeß kann kontinuierlich, in einem Batch- oder im Semibatchverfahren durchgeführt werden.

Die auf erfindungsgemäße Weise hergestellten oligomeren, alkoxylierten Startverbindungen lassen sich direkt, d.h. ohne Katalysatorabtrennung mittels DMC-Katalysatoren zu höhermolekularen, langkettigen Polyetherpolyolen weiterverlängern. Bevorzugt wird die oligomere, alkoxylierte Startverbindung davor zunächst durch Destillation unter vermindertem Druck (0,01-100 mbar) und bei erhöhter Temperatur (50-150°C) von leicht flüchtigen Anteilen befreit.

Die für die aufarbeitungsfreie Herstellung der langkettigen Polyetherpolyole aus den oligomeren, alkoxylierten Startverbindungen einzusetzenden DMC-Katalysatoren sind im Prinzip bekannt und beispielsweise ausführlich beschrieben in EP 700 949, EP 761 708, WO 97/40086 sowie in DE-A 197 45 120, 197 57 574 und 198 10 269.

Ein typisches Beispiel sind die in EP 700 949 beschriebenen hochaktiven DMC-Katalysatoren, die neben einer Doppelmetallcyanidverbindung (z.B. Zinkhexacyanocobaltat) und einem organischen Komplexliganden (z.B. tert.-Butanol) noch einen Polyether mit zahlenmittlerem Molekulargewicht größer als 500 enthalten.

Als Alkylenoxide für die Polyaddition kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Näheres ist "Ullmanns Encyclopädie der industriellen Chemie", englisch-sprachige Ausgabe, 1992, Band A21, Seiten 670-671, zu entnehmen. Besonders bevorzugt wird Propylenoxid eingesetzt.

Als Starter werden erfindungsgemäß oligomere, alkoxylierte Startverbindungen mit 1 bis 8 Hydroxygruppen eingesetzt, die zuvor aus den oben genannten niedermolekularen Startern mittels Katalyse durch die Metallperfluoralkylsulfonate ohne Katalysatorabtrennung hergestellt wurden, und die Molekulargewichte zwischen 200 und 1000 g/mol, bevorzugt zwischen 200 und 800 g/mol, besitzen. Die oligomeren, alkoxylierten Startverbindungen können einzeln oder im Gemisch eingesetzt werden.

Die durch die DMC-Katalysatoren katalysierte Polyaddition von Alkylenoxiden an aktive Wasserstoffatome aufweisende, oligomere, alkoxylierte Startverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,001 bis 20 bar durchgeführt werden. Die Polyaddition kann in Substanz oder einem inerten, organischen Lösungsmittel, wie z.B. Toluol, Xylol oder THF, durchgeführt werden. Die Menge an Lösungsmittel beträgt üblicherweise 10 bis 30 Gew.-%, bezogen auf die Menge des herzustellenden Polyetherpolyols. Bevorzugt wird die Reaktion in Substanz durchgeführt.

Die Katalysatorkonzentration liegt bei 30 ppm oder weniger, bevorzugt bei 25 ppm oder weniger, besonders bevorzugt bei 20 ppm oder weniger, jeweils bezogen auf die Menge des herzustellenden langkettigen Polyetherpolyols. Die unterste Katalysatorkonzentration liegt bei 0,1 ppm.

Bei diesen niedrigen Katalysatorkonzentrationen ist keine Produktaufarbeitung erforderlich. Für den Einsatz in Polyurethan-Anwendungen kann auf eine Abtrennung des Katalysators aus dem Polyol verzichtet werden, ohne daß die Produktqualitäten hierdurch negativ beeinflusst werden.

Die Reaktionszeiten für die Polyaddition liegen im Bereich von wenigen Minuten bis zu mehreren Tagen, bevorzugt bei einigen Stunden.

Die Molekulargewichte der nach dem erfindungsgemäßen Verfahren hergestellten langkettigen Polyetherpolyole liegen im Bereich von 1000 bis 100000 g/mol, bevorzugt im Bereich von 1000 bis 50000 g/mol, besonders bevorzugt im Bereich von 2000 bis 20000 g/mol.

Die Polyaddition kann kontinuierlich, in einem Batch- oder im Semibatchverfahren durchgeführt werden.

Die DMC-Katalysatoren benötigen im allgemeinen eine Induktionszeit von einigen Minuten bis zu mehreren Stunden.

Durch Einsatz der auf erfindungsgemäße Weise durch Katalyse mit den Metallperfluoralkylsulfonaten erhaltenen oligomeren, alkoxylierten Startverbindungen werden die Induktionszeiten bei der DMC-Katalyse deutlich (um ca. 25%) reduziert, im Vergleich zur Verwendung entsprechender oligomerer, alkoxylierter Startverbindungen, die durch Alkali-Katalyse und konventionelle Aufarbeitung (Neutralisation, Filtration, Entwässerung) hergestellt wurden.

Gleichzeitig werden durch den Einsatz der durch Katalyse mit den Metallperfluoralkylsulfonaten hergestellten, oligomeren Startverbindungen auch die Alkoxylierungszeiten bei der DMC-Katalyse wesentlich (um ca. 50-60%) verkürzt.

Dies führt zu einer Verkürzung der Gesamtreaktionszeiten (Summe aus Induktions- und Alkoxylierungszeiten) um typischerweise etwa 50 %. Durch Verkürzung der Cyclenzeiten der Polyetherpolyol-Herstellung wird auf diese Weise die Wirtschaftlichkeit des Prozesses verbessert.

### Beispiele

Herstellung von hochaktivem DMC-Katalysator (Synthese gemäß EP 700 949).

Eine Lösung von 12,5 g (91,5 mMol) Zinkchlorid in 20 ml destilliertem Wasser gibt man unter starkem Rühren (24000 U/min) zu einer Lösung von 4 g (12 mMol) Kaliumhexacyanocobaltat in 70 ml destilliertem Wasser. Sofort danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g Polypropylenglykol mit mittlerer Molmasse 2000, 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polyethers gerührt (10000 U/min) und erneut filtriert. Abschließend wird noch einmal 10 min mit einer Mischung aus 100 g tert.-Butanol und 0,5 g des obigen Polyethers gerührt (10000 U/min). Nach Filtration wird der Katalysator bei 50°C und Normaldruck bis zur Gewichtskonstanz getrocknet.

Ausbeute an getrocknetem, pulverförmigem Katalysator: 6,23 g

Elementaranalyse und Thermogravimetrische Analyse:
Cobalt = 11,6 %, Zink = 24,6 %, tert.-Butanol = 3,0 %, Polyether = 25,8 %

### Beispiel 1

### Stufe A,

### Herstellung von oligomerer, propoxylierter Startverbindung mittels Yttriumtriflat-Katalyse

In einem 10 l Druckglaskolben werden 1839 g Trimethylolpropan (TMP) und 0,12 g Yttriumtriflat-Katalysator (20 ppm, bezogen auf die Menge der herzustellenden propoxylierten Startverbindung) unter Schutzgas (Stickstoff) vorgelegt und unter Rühren auf 130°C aufgeheizt. Anschließend werden 4161 g Propylenoxid mittels einer Membranpumpe bei 130°C und einem Gesamtdruck von 1,5 bar zudosiert. Nach vollständiger Propylenoxid-Dosierung und 5 Stunden Nachreaktionszeit bei 130°C werden flüchtige Anteile bei 105°C (1 mbar) abdestilliert und anschließend auf Raumtemperatur abgekühlt.
Die erhaltene propoxylierte Startverbindung ist ein farbloses Öl mit der OH-Zahl = 365 mg KOH/g.

### Stufe B,

### Herstellung von langkettigem Polyetherpolyol aus der oligomeren, propoxylierten Startverbindung mittels DMC-Katalyse

In einem 10 l Druckglaskolben werden 460 g der propoxylierten Startverbindung aus Stufe A, und 0,12 g DMC-Katalysator (20 ppm, bezogen auf die Menge des herzustellenden langkettigen Polyols) unter Schutzgas (Stickstoff) vorgelegt und unter Rühren auf 105°C aufgeheizt. Anschließend wird Propylenoxid (ca. 50 g) auf einmal zudosiert, bis der Gesamtdruck auf 1,5 bar angestiegen ist. Weiteres Propylenoxid wird erst dann wieder zudosiert, wenn ein beschleunigter Druckabfall beobachtet wird. Dieser beschleunigte Druckabfall zeigt an, daß der Katalysator aktiviert ist. Anschließend wird das restliche Propylenoxid (5490 g) kontinuierlich bei einem konstanten Gesamtdruck von 1,5 bar zudosiert. Nach vollständiger Propylenoxid-Dosierung und 5 Stunden Nachreaktionszeit bei 105°C werden flüchtige Anteile bei 105°C (1 mbar) abdestilliert und anschließend auf Raumtemperatur abgekühlt.

Das erhaltene langkettige Polyetherpolyol besitzt eine OH-Zahl = 28,5 mg KOH/g und einen Doppelbindungsgehalt = 7 mMol/kg.

Die Induktionszeit wurde aus der Zeit-Umsatz-Kurve (Propylenoxid-Verbrauch [g] vs. Reaktionszeit [min]) aus dem Schnittpunkt der Tangente an den steilsten Punkt der Zeit-Umsatz-Kurve mit der verlängerten Basislinie der Kurve bestimmt.

Die Propoxylierungszeit entspricht dem Zeitraum zwischen Katalysatoraktivierung (Ende der Induktionsperiode) und dem Ende der Propylenoxid-Dosierung.

Die Gesamtreaktionszeit ist die Summe aus Induktions- und Propoxylierungszeit.

| | |
|---|---|
| Induktionszeit | 180 min |
| Propoxylierungszeit | 240 min |
| Gesamtreaktionszeit | 420 min |

### Vergleichsbeispiel 2

Herstellung von langkettigem Polyetherpolyol mittels DMC-Katalyse aus oligomerer, propoxylierter Startverbindung, die durch KOH-Katalyse und konventionelle Aufarbeitung (Katalysatorentfernung mittels Neutralisation und Filtration) erhalten wurde

Wie Beispiel 1, Stufe B, jedoch mit:
- Vorlage von 437 g eines Poly(oxypropylen)triols mit OH-Zahl = 380 mg KOH/g (hergestellt aus Trimethylolpropan und Propylenoxid durch KOH-Katalyse und konventionelle Aufarbeitung)
- Dosierung von insgesamt 5563 g Propylenoxid

Das erhaltene langkettige Polyetherpolyol besitzt eine OH-Zahl = 29,3 mg KOH/g und einen Doppelbindungsgehalt = 6 mMol/kg.

| | |
|---|---|
| Induktionszeit | 240 min |
| Propoxylierungszeit | 555 min |
| Gesamtreaktionszeit | 795 min |

### Beispiel 3

### Stufe A,

### Herstellung von oligomerer, propoxylierter Startverbindung mittels Yttriumtriflat-Katalyse

In einem 10 l Druckglaskolben werden 2627 g Trimethylolpropan (TMP) und 0,12 g Yttriumtriflat-Katalysator (20 ppm, bezogen auf die Menge der herzustellenden propoxylierten Startverbindung) unter Schutzgas (Stickstoff) vorgelegt und unter Rühren auf 130°C aufgeheizt. Anschließend werden 3373 g Propylenoxid mittels einer Membranpumpe bei 130°C und einem Gesamtdruck von 1,5 bar zudosiert. Nach vollständiger Propylenoxid-Dosierung und 5 Stunden Nachreaktionszeit bei 130°C werden flüchtige Anteile bei 105°C (1 mbar) abdestilliert und anschließend auf Raumtemperatur abgekühlt.
Die erhaltene propoxylierte Startverbindung ist ein farbloses Öl mit der OH-Zahl = 538 mg KOH/g.

### Stufe B,

### Herstellung von langkettigem Polyetherpolyol aus der oligomeren, propoxylierten Startverbindung mittels DMC-Katalyse

In einem 10 l Druckglaskolben werden 324 g der propoxylierten Startverbindung aus Stufe A, und 0,18 g DMC-Katalysator (30 ppm, bezogen auf die Menge des herzustellenden langkettigen Polyols) unter Schutzgas (Stickstoff) vorgelegt und unter Rühren auf 105°C aufgeheizt. Anschließend wird Propylenoxid (ca. 30 g) auf einmal zudosiert, bis der Gesamtdruck auf 1,5 bar angestiegen ist. Weiteres Propylenoxid wird erst dann wieder zudosiert, wenn ein beschleunigter Druckabfall beobachtet wird. Dieser beschleunigte Druckabfall zeigt an, daß der Katalysator aktiviert ist. Anschließend wird das restliche Propylenoxid (5646 g) kontinuierlich bei einem konstanten Gesamtdruck von 1,5 bar zudosiert. Nach vollständiger Propylenoxid-Dosierung und 5 Stunden Nachreaktionszeit bei 105°C werden flüchtige Anteile bei 105°C (1 mbar) abdestilliert und anschließend auf Raumtemperatur abgekühlt.

Das erhaltene langkettige Polyetherpolyol besitzt eine OH-Zahl = 29,8 mg KOH/g und einen Doppelbindungsgehalt = 6 mMol/kg.

| | |
|---|---|
| Induktionszeit | 390 min |
| Propoxylierungszeit | 405 min |
| Gesamtreaktionszeit | 795 min |

### Vergleichsbeispiel 4

Herstellung von langkettigem Polyetherpolyol mittels DMC-Katalyse aus oligomerer, propoxylierter Startverbindung, die durch KOH-Katalyse und konventionelle Aufarbeitung erhalten wurde

Wie Beispiel 3, Stufe B, jedoch mit:
- Vorlage von 316 g eines Poly(oxypropylen)triols mit OH-Zahl = 550 mg KOH/g (hergestellt aus Trimethylolpropan und Propylenoxid durch KOH-Katalyse und konventionelle Aufarbeitung)
   Nach anfänglicher Dosierung von ca. 30 g Propylenoxid bis zu einem Gesamtdruck von 1,5 bar tritt über einen Zeitraum von 22 Stunden kein Druckabfall auf, d.h. es erfolgt keine Aktivierung des Katalysators.

Beispiele 1 und 3 zeigen, daß durch Katalyse mit den in DE-A 197 02 787 beschriebenen Metallperfluoralkylsulfonaten bei sehr geringen Katalysatoreinsätzen (20 ppm) aus konventionellen, niedermolekularen Startern (z.B. Propylenglykol, Trimethylolpropan) durch Umsetzung mit Propylenoxid oligomere, propoxylierte Startverbindungen erhalten werden, die direkt, d.h. ohne Aufarbeitung und Katalysatorabtrennung, mittels hochaktiver DMC-Katalysatoren bei sehr geringen Katalysatoreinsätzen (≤ 30 ppm) durch Reaktion mit Propylenoxid zu langkettigen Polyetherpolyolen umgesetzt werden können. Somit ist durch das erfindungsgemäße Verfahren eine vollständig aufarbeitungsfreie Herstellung langkettiger Polyetherpolyole möglich.

Ein Vergleich von Beispiel 1 und Vergleichsbeispiel 2 zeigt, daß beim Einsatz der durch Katalyse mit den Metallperfluoralkylsulfonaten erhaltenen oligomeren, propoxylierten Startverbindungen die Induktions- und Propoxylierungszeiten bei der DMC-Katalyse deutlich verkürzt sind, im Vergleich zur Verwendung entsprechender Startverbindungen, die durch KOH-Katalyse und konventionelle Aufarbeitung (Neutralisation, Filtration, Entwässerung) hergestellt wurden. Dies führt beim erfindungsgemäßen Verfahren zu einer Verkürzung der Gesamtreaktionszeiten der DMC-Katalyse um etwa 50 %.

## Patentansprüche

1. Verfahren zur Herstellung von langkettigen Polyetherpolyolen, **dadurch gekennzeichnet, daß** zunächst durch Katalyse mit Perfluoralkylsulfonaten der Metalle der Gruppe III A des Periodensystems der Elemente (entsprechend der IUPAC-Konvention von 1970) aus Startern mit Molgewichten von 18-400g/mol durch Umsetzung mit Alkylenoxiden bei Reaktionstemperaturen von 80 bis 200°C und Katalysatorkonzentrationen von 5 bis 200 ppm oligomere, alkoxylierte Startverbindungen mit Molekulargewichten von 200 bis 1000 g/mol erhalten werden, die anschließend ohne Aufarbeitung und Katalysatorabtrennung mittels DMC-Katalysatorcn bei einer Katalysatorkonzentration von 0,1-30ppm DMC-katalysator, bezogen auf die Menge des herzustellenden Polyetherpolyols, durch Reaktion mit Alkylenoxiden zu langkettigen Polyetherpolyolen mit Molgewichten von 1000 - 100,000 g/mol umgesetzt werden.

2. Verfahren nach Anspruch 1, **dadurch gekennzeichnet, daß** als Perfluoralkylsulfonate der Metalle der Gruppe III A des Periodensystems der Elemente (entsprechend der IUPAC-Konvention von 1970) die entsprechenden Trifluormethansulfonate (Triflate) eingesetzt werden.

3. Verfahren nach Anspruch 1, **dadurch gekennzeichnet, daß** das Perfluoralkylsulfonat der Metalle der Gruppe III A des Periodensystems der Elemente (entsprechend der IUPAC-Konvention von 1970) ausgewählt wird aus den Verbindungen Scandium-, Yttrium-, Lanthan-, Cer-, Praseodym-, Neodym-, Samarium-, Europium-, Gadolinium-, Terbium-, Dysprosium-, Holmium-, Erbium-, Thulium-, Ytterbium-, Luthetiumtriflat oder deren Gemischen.

4. Verfahren nach Anspruch 1, **dadurch gekennzeichnet, daß** als niedermolekularer Starter Ethylenglykol, Diethylenglykol, Triethylenglykol, 1,2-Propylenglykol, Dipropylenglykol, 1,4-Butandiol, Hexamethylenglykol, Bisphenol A, Trimethylolpropan, Glycerin, Pentaerythrit, Sorbit, Rohrzucker, abgebaute Stärke, Wasser sowie deren Gemische eingesetzt werden.

5. Verfahren nach Anspruch 1, **dadurch gekennzeichnet, daß** die Herstellung der oligomeren, alkoxylierten Startverbindungen bei Reaktionstemperaturen von 90 bis 180°C und Katalysatorkonzentrationen von 5 bis 100 ppm, bezogen auf die Menge der herzustellenden oligomeren, alkoxylierten Startverbindung, durchgeführt wird.

6. Verfahren nach Anspruch 1, **dadurch gekennzeichnet, daß** die Herstellung der oligomeren, alkoxylierten Startverbindungen bei Reaktionstemperaturen von 100 bis 160°C und Katalysatorkonzentrationen von 10 bis 50 ppm, bezogen auf die Menge der herzustellenden oligomeren, alkoxylierten Startverbindung, durchgeführt wird.

## Claims

1. A process for the production of long-chain polyether polyols, **characterised in that** oligomeric, alkoxylated starter compounds having molecular weights of 200 to 1000 g/mol are first obtained by catalysis with perfluoroalkylsulfonates of the metals of group III A of the periodic system of elements (in accordance with the IUPAC convention of 1970) from starters having molecular weights of 18-400 g/mol by reaction with alkylene oxides at reaction temperatures of 80 to 200°C and catalyst concentrations of 5 to 200 ppm, which oligomeric, alkoxylated starter compounds are then converted without working up and removal of the catalyst by means of DMC catalysts at a catalyst concentration of 0.1-30 ppm of DMC catalyst, relative to the quantity of polyether polyol to be produced, by reaction with alkylene oxides into long-chain polyether polyols having molecular weights of 1000-100,000 g/mol.

2. A process according to claim 1, **characterised in that** the perfluoroalkylsulfonates of the metals of group III A of the periodic system of elements (in accordance with the IUPAC convention of 1970) which are used are the corresponding trifluoromethanesulfonates (triflates).

3. A process according to claim 1, **characterised in that** the perfluoroalkylsulfonate of the metals of group III A of the periodic system of elements (in accordance with the IUPAC convention of 1970) is selected from the compounds scandium, yttrium, lanthanum, cerium, praseodymium, neodymium, samarium, europium, gadolinium, terbium, dysprosium, holmium, erbium, thulium, ytterbium and lutetium triflate or mixtures thereof.

4. A process according to claim 1, **characterised in that** the low molecular weight starters which are used are ethylene glycol, diethylene glycol, triethylene glycol, 1,2-propylene glycol, dipropylene glycol, 1,4-butanediol, hexamethylene glycol, bisphenol A, trimethylolpropane, glycerol, pentaerythritol, sorbitol, cane sugar, degraded starch, water as well as mixtures thereof.

5. A process according to claim 1, **characterised in that** the production of the oligomeric, alkoxylated starter compounds is performed at reaction temperatures of 90 to 180°C and catalyst concentrations of 5 to 100 ppm, relative to the quantity of the oligomeric, alkoxylated starter compound to be produced.

6. A process according to claim 1, **characterised in that** the production of the oligomeric, alkoxylated starter compounds is performed at reaction temperatures of 100 to 160°C and catalyst concentrations of 10 to 50 ppm, relative to the quantity of the oligomeric, alkoxylated starter compound to be produced.

## Revendications

1. Procédé de préparation de polyétherpolyols à longue chaîne, **caractérisé en ce que** l'on prépare d'abord, à partir de composés de départ ayant des masses molaires de 18 à 400 g/mol, par réaction avec des oxydes d'alkylène catalysée avec des perfluoroalkylsulfonates des métaux du groupe III A du système périodique des éléments (selon la convention de l'UICPA de 1970), à des températures de réaction de 80 et 200°C et des concentrations de catalyseur de 5 à 200 ppm, des composés de départ alcoxylés oligomères ayant des masses molaires de 200 à 1 000 g/mol, que l'on transforme ensuite, sans traitement et sans séparation du catalyseur, en polyétherpolyols à longue chaîne par réaction avec des oxydes d'alkylène à l'aide de catalyseurs DMC à une concentration de catalyseur de 0,1 à 30 ppm de catalyseur DMC par rapport à la quantité du polyétherpolyol à préparer.

2. Procédé selon la revendication 1, **caractérisé en ce que** l'on utilise comme perfluoroalkylsulfonates des métaux du groupe III A du système périodique des éléments (selon la convention de l'UICPA de 1970) les trifluorométhanesulfonates (triflates) correspondants.

3. Procédé selon la revendication 1, **caractérisé en ce que** le perfluoroalkylsulfonate des métaux du groupe III A du système périodique des éléments (selon la convention de l'UICPA de 1970) est choisi parmi les triflates de scandium, d'yttrium, de lanthane, de cérium, de praséodyme, de néodyme, de samarium, d'europium, de gadolinium, de terbium, de dysprosium, d'holmium, d'erbium, de thulium, d'ytterbium et de lutétium ou leurs mélanges.

4. Procédé selon la revendication 1, **caractérisé en ce que**, comme composé de départ de faible masse molaire, on utilise de l'éthylèneglycol, du diéthylèneglycol, du triéthylèneglycol, du 1,2-propylèneglycol, du dipropylèneglycol, du 1,4-butanediol, de l'hexaméthylèneglycol, du bisphénol A, du triméthylolpropane, du glycérol, du pentaérythritol, du sorbitol, du sucre brut, de l'amidon dégradé, de l'eau et leurs mélanges.

5. Procédé selon la revendication 1, **caractérisé en ce que** la préparation des composés de départ alcoxylés oligomères s'effectue à des températures de réaction de 90 à 180°C et à des concentrations de catalyseur de 5 à 100 ppm par rapport à la quantité de composé de départ alcoxylé oligomère à préparer.

6. Procédé selon la revendication 1, **caractérisé en ce que** la préparation des composés de départ alcoxylés oligomères s'effectue à des températures de réaction de 100 à 160°C et à des concentrations de catalyseur de 10 à 50 ppm par rapport à la quantité de composé de départ alcoxylé oligomère à préparer.
